# EUROPEAN PATENT APPLICATION

(11) **EP 4 712 199 A1**
(43) Date of publication of application: **18.03.2026**
(21) Application number: 25193131.7
(22) Date of filing: 31.07.2025
(51) Int. Cl.: H01M 10/34, H01M 10/44, H01M 10/05, H01M 10/052

(54) **METHOD OF MANUFACTURING NON-AQUEOUS ELECTROLYTE SECONDARY BATTERY**

(30) Priority: 12.09.2024 JP 2024158608
(71) Applicant: Prime Planet Energy & Solutions, Inc., Chuo-ku, Tokyo 103-0022 (JP)
(72) Inventor: WATANABE, Kensuke, Tokyo, 103-0022 (JP)
(74) Representative: Kuhnen & Wacker Patent- und Rechtsanwaltsbüro PartG mbB

(57) **Abstract**

A method of manufacturing a non-aqueous electrolyte secondary battery includes the steps of obtaining a battery assembly, charging, and sealing. The battery assembly includes an electrode body, a non-aqueous electrolyte solution, and a battery case including a through hole. The step of charging involves charging the battery assembly. The step of sealing involves sealing the through hole with a sealing member after the charging step. In the step of charging, the charging is performed under a charging condition that causes a temperature of a gas inside the battery case increases. The step of sealing is performed while keeping the temperature inside the battery case having been increased. After the step of sealing, the temperature inside the battery case decreases, and the gas inside the battery case contracts, to thereby cause a contraction and/or an internal pressure decrease of the battery case.

## Description

### BACKGROUND

The present disclosure relates to a method of manufacturing a non-aqueous electrolyte secondary battery.

JP 2018-163858 A discloses a method of manufacturing a prismatic secondary battery. The manufacturing method disclosed in the publication includes a charging step and a gas discharging step that are performed after an electrolyte filling step of filling with a non-non-aqueous electrolyte solution. The charging step involves charging a battery. The gas discharging step involves discharging a portion (15% or more) of the gas inside the case from an electrolyte filling port to outside of the battery case.

### SUMMARY

The present inventor intends to prevent expansion of non-aqueous electrolyte secondary batteries.

An embodiment of the method of manufacturing a non-aqueous electrolyte secondary battery disclosed herein includes the steps of obtaining a battery assembly, charging, and sealing. The battery assembly includes an electrode body, a non-aqueous electrolyte solution, and a battery case including a through hole and housing the electrode body and the electrolyte solution. The electrode body includes a positive electrode and a negative electrode. The step of charging involves charging the battery assembly. The step of sealing involves sealing the through hole with a sealing member after the charging step. In the step of charging, the charging is performed under a charging condition that causes a temperature of a gas inside the battery case increases. The step of sealing is performed while keeping the temperature inside the battery case having been increased. After the step of sealing, the temperature inside the battery case decreases, and the gas inside the battery case contracts, to thereby cause a contraction and/or an internal pressure decrease of the battery case.

The just-described method is able to prevent expansion of the non-aqueous electrolyte secondary battery after manufacture.

### BRIEF DESCRIPTION OF THE DRAWINGS

Fig. 1 is a flowchart illustrating a method of manufacturing a non-aqueous electrolyte secondary battery.
Fig. 2 is a perspective view illustrating a battery assembly (non-aqueous electrolyte secondary battery) 100.
Fig. 3 is a schematic cross-sectional view taken along line III-III in Fig. 2.
Fig. 4 is a schematic view of an electrode body 40.
Fig. 5 is a perspective view of the electrode body 40.
Fig. 6 is a perspective view illustrating electrode bodies 40 to which a lid 54 is attached.
Fig. 7 is a schematic view illustrating the condition of gas G inside a battery case 50.
Fig. 8 is a schematic view illustrating the condition of gas G inside the battery case 50.
Fig. 9 is a flowchart illustrating a method of manufacturing a non-aqueous electrolyte secondary battery according to another embodiment of the disclosure.
Fig. 10 is a cross-sectional view illustrating the battery assembly 100 in a depressurizing step S25.

### DETAILED DESCRIPTION

Hereinbelow, embodiments of the technology according to the present disclosure will be described with reference to the drawings. It should be noted, however, that the embodiments disclosed herein are, of course, not intended to limit the disclosure. The drawings are depicted schematically and do not necessarily accurately depict actual objects. The features and components that exhibit the same effects are designated by the same reference symbols as appropriate, and the description thereof will not be repeated as appropriate. In the following description, reference characters L, R, F, Rr, U and D in the drawings represent left, right, front, rear, up, and down, respectively, and reference characters X, Y, and Z in the drawings represent the shorter-side axis, the longer-side axis, and the heightwise axis of the non-aqueous electrolyte secondary battery (battery assembly), respectively. These directional terms are, however, merely provided for purposes in illustration and are not intended to limit the arrangements and embodiments of the non-aqueous electrolyte secondary battery or the like in any way. It should be noted that the recitation of numerical ranges in the present description, such as "A to B", is meant to include any values between the upper limits and the lower limits, inclusive, that is, "greater than or equal to A to less than or equal to B" as well as "greater than A" and "less than B".

Hereinbelow, embodiments of the method of manufacturing a non-aqueous electrolyte secondary battery disclosed herein will be described with reference to examples in which the non-aqueous electrolyte secondary battery is a lithium-ion secondary battery.

### Method of Manufacturing Non-Aqueous Electrolyte Secondary Battery

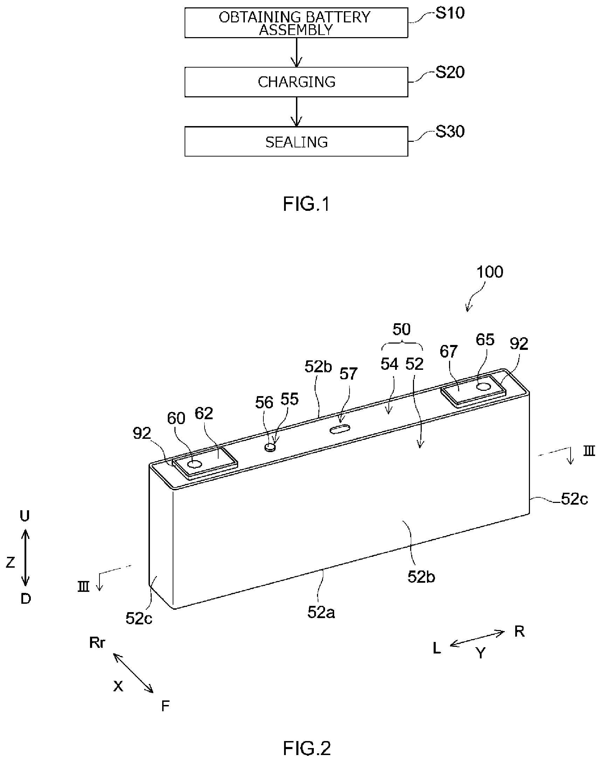

Fig. 1 is a flowchart illustrating a method of manufacturing a non-aqueous electrolyte secondary battery. As illustrated in Fig. 1, the method of manufacturing a non-aqueous electrolyte secondary battery disclosed herein includes a step S10 of obtaining a battery assembly, a charging step S20, and a sealing step S30.

### Step S10 of Obtaining Battery Assembly

The step S10 of obtaining a battery assembly involves obtaining a battery assembly 100 in which an electrode body 40 including a positive electrode 10 and a negative electrode 20 and a non-aqueous electrolyte solution are housed in a battery case 50.

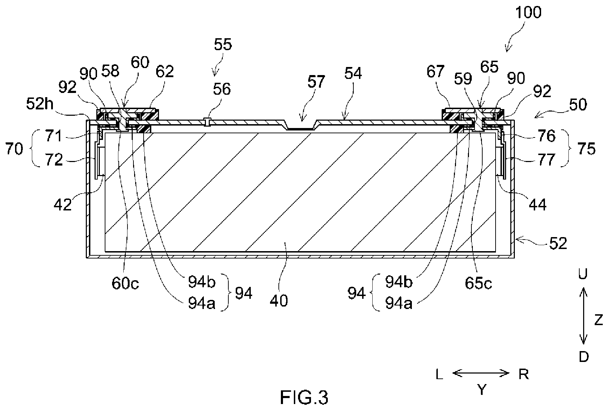

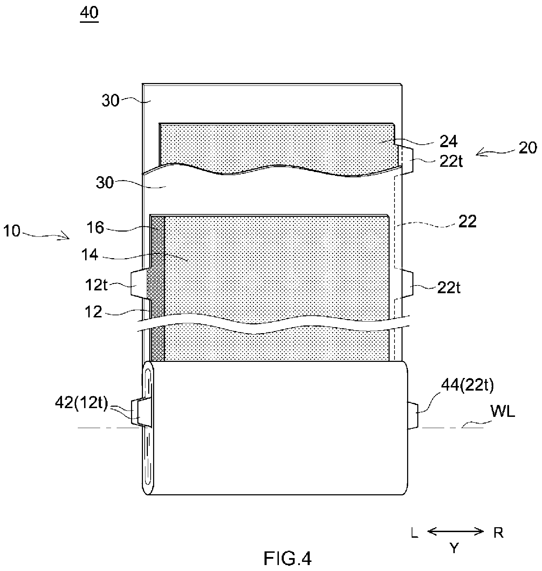

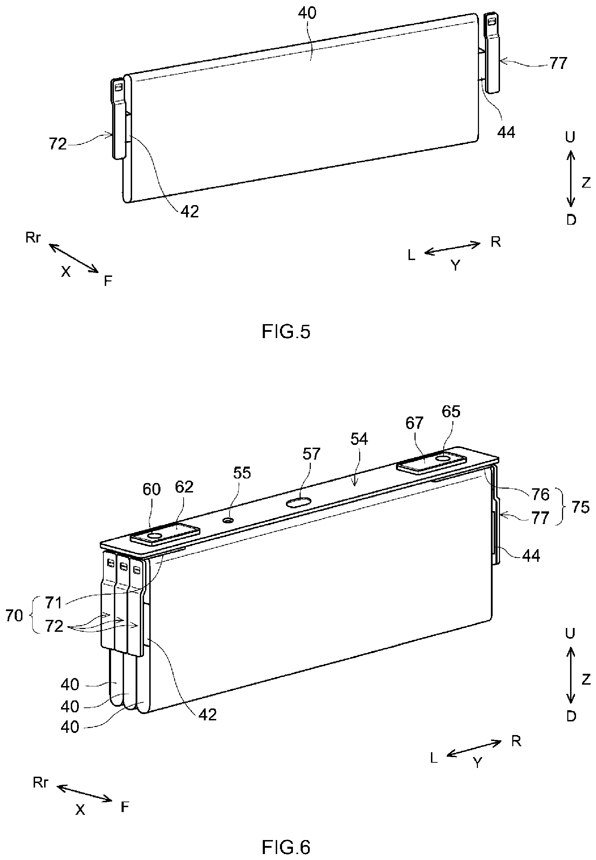

Fig. 2 is a perspective view illustrating a battery assembly (non-aqueous electrolyte secondary battery) 100. Fig. 3 is a schematic cross-sectional view taken along line III-III in Fig. 2. Fig. 4 is a schematic view of the electrode body 40. Fig. 5 is a perspective view of the electrode body 40. Fig. 6 is a perspective view illustrating electrode bodies 40 to which a lid 54 is attached. It should be noted that the non-aqueous electrolyte secondary battery has the same configuration as the battery assembly except that a sealing member 56 is attached thereto.

### Battery Assembly 100

As illustrated in Fig. 3, the battery assembly 100 includes a battery case 50 that houses electrode bodies 40 and a non-aqueous electrolyte (not shown). In the present description, the battery assembly 100 is such that the constituent components of a non-aqueous electrolyte secondary battery 100 (hereinafter also simply referred to as a "battery") are assembled and a non-aqueous electrolyte solution is filled therein. Hereinafter, the same reference characters are used to describe the non-aqueous electrolyte secondary battery and the battery assembly. In the present description, the battery assembly 100 has a configuration that is before initial charging is performed and before a through hole 55 is sealed after the non-aqueous electrolyte solution is filled.

### Battery Case 50

The battery case 50 (see Figs. 2 and 3) includes a through hole 55. The battery case 50 may be made of any conventionally known material without any particular restriction. The battery case 50 may be, for example, made of a metal. Examples of the material for the battery case 50 may include aluminum, aluminum alloys, iron, and iron alloys. Although not particularly limited thereto, the battery case 50 may preferably be made of aluminum or an aluminum alloy. In this embodiment, the battery case 50 is in a prismatic shape (rectangular parallelepiped shape). The battery case 50 includes a case main body 52 and a lid 54.

The case main body 52 includes a flat, substantially rectangular bottom wall 52a, a pair of first side walls 52b extending upward along the height axis Z from longer sides of the bottom wall 52a, and a pair of second side walls 52c extending upward along the height axis Z from shorter sides of the bottom wall 52a (see Fig. 2). An opening 52h is formed at the top of the case main body 52.

The lid 54 is a plate-shaped member in a substantially rectangular shape viewed in plan. The lid 54 is a member that closes the opening 52h of the case main body 52. The lid 54 is provided with a through hole 55 and a gas vent valve 57. The through hole 55 may preferably be an electrolyte filling port provided for filling the interior of the battery case 50 with a non-aqueous electrolyte solution (not shown). When filling with the non-aqueous electrolyte solution is completed, the through hole 55 is sealed with a sealing member 56. The details of filling with the non-aqueous electrolyte solution will be described later. Although the through hole 55 is provided in the lid 54 in this embodiment, such an embodiment is merely illustrative. The through hole 55 may also be provided in the case main body 52. The gas vent valve 57 is a thinned portion that is designed to rupture (i.e., to open) when a large amount of gas is generated inside the battery case 50, so as to expel the gas.

The lid 54 is formed with terminal insertion holes 58 and 59, to which a positive electrode terminal 60 and a negative electrode terminal 65 are fitted respectively. The terminal insertion holes 58 and 59 are formed at respective end portions of the lid 54 along the longitudinal axis Y.

The positive electrode terminal 60 and the negative electrode terminal 65 are fitted to the lid 54 at respective end portions of the longitudinal axis Y of the battery 100. The positive electrode terminal 60 is connected to a plate-shaped positive electrode external conductive member 62 outside the battery case 50. The negative electrode terminal 65 is connected to a plate-shaped negative electrode external conductive member 67 outside the battery case 50. The positive electrode external conductive member 62 and the negative electrode external conductive member 67 are connected to other electricity storage devices and external devices via an external connecting member (such as a bus bar).

A positive electrode first current collector 71 and a negative electrode first current collector 76 are attached to an inner surface of the lid 54. Each of the positive electrode first current collector 71 and the negative electrode first current collector 76 is a plate-shaped conductive member extending along the inner surface of the lid 54. A lower end 60c of the positive electrode terminal 60 is connected to the positive electrode first current collector 71. A lower end 65c of the negative electrode terminal 65 is connected to the negative electrode first current collector 76.

The lid 54 is provided with various insulating members that prevent electrical conduction between the battery case 50 (i.e., the case main body 52 and the lid 54) and the electrode terminals (i.e., the positive electrode terminal 60 and the negative electrode terminal 65). Each of the terminal insertion holes 58 and 59 in the lid 54 is fitted with a gasket 90 that prevents electrical conduction between the electrode terminals and the lid 54. An outer insulating member 92 is disposed between the positive electrode external conductive member 62 (or the negative electrode external conductive member 67) and the outer surface of the lid 54. An inner insulating member 94 is disposed between the positive electrode first current collector 71 (or the negative electrode first current collector 76) and the inner surface of the lid 54. The inner insulating member 94 includes a plate-shaped base portion 94a attached to the inner surface of the lid 54. The inner insulating member 94 incudes a protruding portion 94b protruding from the base portion 94a toward the electrode body 40. The protruding portion 94b restricts upward and downward movements of the electrode body 40 to prevent the electrode body 40 and the lid 54 from coming into direct contact with each other. The material for the above-described insulating members is not limited to any particular material as long as the material has predetermined insulating capability. Examples of the insulating member may include synthetic resin materials, such as polyolefin-based resins and fluorine-based resins.

The lid 54 is fitted to the top of the case main body 52 in the state in which the electrode bodies 40 are attached through a positive electrode current collector 70 and a negative electrode current collector 75 thereto, to seal the opening 52h.

### Electrode Body 40

As illustrated in Fig. 4, the electrode body 40 is a flat-shaped electrode body in which a strip-shaped positive electrode 10 and a strip-shaped negative electrode 20 are wound together with strip-shaped separators 30 interposed therebetween. In this embodiment, the electrode body 40 is what is called a wound electrode body. The electrode body 40 is not limited to such an embodiment, but may be what is called a stacked electrode body in which a plurality of positive electrodes and a plurality of negative electrodes are alternately stacked on each other with separators interposed therebetween.

### Positive Electrode 10

The positive electrode 10 is an oblong strip-shaped member. The positive electrode 10 includes a positive electrode substrate 12, which is a metal member in a foil shape, and a positive electrode active material layer 14, which is formed on a surface of the positive electrode substrate 12. From the viewpoint of battery performance, the positive electrode active material layer 14 may preferably be formed on both surfaces of the positive electrode substrate 12. One side edge of the positive electrode 10 is provided with positive electrode tabs 12t protruding outward along the Y axis (leftward in Fig. 4). A plurality of the positive electrode tabs 12t are provided along the longitudinal axis of the positive electrode 10 so as to be spaced at predetermined intervals. Each of the positive electrode tabs 12t is not provided with the positive electrode active material layer 14 or a protective layer 16 so that the positive electrode substrate 12 is exposed therefrom. For the positive electrode substrate 12, it is possible to use a metal material having predetermined electrical conductivity. It is preferable that the positive electrode substrate 12 be made of, for example, aluminum or an aluminum alloy.

The positive electrode active material layer 14 is a layer containing a positive electrode active material. The positive electrode active material is a material that is able to reversibly absorb and release charge carriers in relation to the later-described negative electrode active material. The positive electrode active material is not limited to any particular material. For the positive electrode active material, it is possible to use, for example, lithium-transition metal composite oxides.

The positive electrode active material layer 14 may contain additive agents, other than the positive electrode active material. The positive electrode active material layer 14 may contain a binder. A suitable example of the binder may be a resin binder. Suitable examples of the resin binder may include, for example, polyvinylidene fluoride (PVDF). The positive electrode active material layer 14 may preferably contain a conductive agent. Suitable examples of the conductive agent include carbon materials such as acetylene black (AB).

A protective layer 16 may be provided, as necessary, on one side edge portion of the positive electrode 10. The protective layer 16 is a layer configured to show a lower electrical conductivity than the positive electrode active material layer 14. The protective layer 16 is provided on the positive electrode substrate 12 at a position facing the negative electrode active material layer 24 across the separator 30. Although the configuration of the protective layer 16 is not particularly limited, the protective layer 16 may be, for example, a layer coated with a resin or a layer containing inorganic particles or a binder.

### Negative Electrode 20

The negative electrode 20 is an oblong strip-shaped member. The negative electrode 20 includes a negative electrode substrate 22, which is a metal member in a foil shape, and a negative electrode active material layer 24, which is formed on a surface of the negative electrode substrate 22. From the viewpoint of battery performance, the negative electrode active material layer 24 may preferably be formed on both surfaces of the negative electrode substrate 22. One side edge of the negative electrode 20 is provided with negative electrode tabs 22t protruding outward along the Y axis (rightward in Fig. 4). The negative electrode tabs 22t protrude in the opposite direction to the above-described positive electrode tab 12t. A plurality of the negative electrode tabs 22t are provided along the longitudinal axis of the negative electrode 20 so as to be spaced at predetermined intervals. Each of the negative electrode tabs 22t is not provided with the negative electrode active material layer 24 so that the negative electrode substrate 22 is exposed therefrom. For the negative electrode substrate 22, it is possible to use a metal material having predetermined electrical conductivity. It is preferable that the negative electrode substrate 22 be made of, for example, copper or a copper alloy.

The negative electrode active material layer 24 is a layer containing a negative electrode active material. The negative electrode active material is a material that is able to reversibly absorb and release charge carriers in relation to the positive electrode active material. The negative electrode active material is not limited to any particular material. Suitable examples of the negative electrode active material include, for example, carbon materials, silicon based materials, and composite oxides thereof. Examples of the carbon materials may include graphite, hard carbon, soft carbon, and amorphous carbon. Examples of the silicon based materials include silicon and silicon oxide (silica).

The negative electrode active material layer 24 may contain additive agents, other than the negative electrode active material. The negative electrode active material layer 24 may contain a binder as an additive agent. A suitable example of the binder is a resin binder. Examples of the resin binder may include styrene-butadiene rubber (SBR), carboxymethylcellulose (CMC), and polyacrylic acid (PAA), for example. The negative electrode active material layer 24 may preferably contain a conductive agent. Suitable examples of the conductive agent include carbon materials, such as acetylene black (AB) and carbon nanotubes.

### Separator 30

The separator 30 is an oblong strip-shaped member that has the function to prevent the positive electrode 10 and the negative electrode 20 from coming into contact and also to allow charge carriers to pass therethrough. The width of the separator 30 may be set to a size such as to be able to cover the positive electrode active material layer 14 of the positive electrode 10 and the negative electrode active material layer 24 of the negative electrode 20.

The separator 30 may preferably use a porous resin film in which a plurality of micropores allowing charge carriers to pass through. Examples of the separator 30 include porous sheets (films) made of various types of resins, including polyolefins and polyamides, such as polyethylene (PE) and polypropylene (PP). Such a porous sheet may have either a single layer structure or a layered structure including two or more layers (for example, a three-layer structure in which PP layers are formed on both faces of a PE layer).

The resin sheet that forms the separator 30 may also be provided with a heat resistant layer. The heat resistant layer is a layer that exhibits excellent heat resistance. It is preferable that the heat resistant layer contain ceramic particles and a binder. For the ceramic particles, it is possible to use, for example, alumina or the like.

The separator 30 may also include an adhesive layer. The adhesive layer is a layer that exhibits excellent adhesiveness with the electrode plates (i.e., the positive electrode 10 and the negative electrode 20). The adhesive layer may use any known material. The adhesive layer may use resin materials. The adhesive layer may contain a binder, such as polyvinylidene fluoride. The adhesive layer may also contain ceramic particles.

From the electrode body 40, a positive electrode tab group 42 and a negative electrode tab group 44 protrude along the winding axis WL direction. The positive electrode tab group 42 and the negative electrode tab group 44 protrude in opposite directions to each other from respective different side faces. As illustrated in Fig. 5, a positive electrode second current collector 72 and a negative electrode second current collector 77 are connected respectively to the positive electrode tab group 42 and the negative electrode tab group 44. As illustrated in Fig. 6, the positive electrode tab group 42 is bent and is connected to the lid 54 via the positive electrode first current collector 71 and the positive electrode second current collector 72. Likewise, the negative electrode tab group 44 is bent and is connected to the lid 54 via the negative electrode first current collector 76 and the negative electrode second current collector 77. Note that the positive electrode first current collector 71 and the positive electrode second current collector 72 constitute a positive electrode current collector 70, and the negative electrode first current collector 76 and the negative electrode second current collector 77 constitute a negative electrode current collector 75. In this embodiment, a plurality of (three) electrode bodies 40 are housed in the case main body 52 (see Fig. 3) with the lid 54 attached thereto. The number of the electrode bodies 40 to be housed in the battery case 50 is not particularly limited.

As illustrated in Fig. 2, after the electrode bodies 40 are housed, the peripheral edge portion of the lid 54 is fitted to the top of the case main body 52, and the opening 52h (see Fig. 3) of the case main body 52 is sealed. The lid 54 may be fitted to the top of the case main body 52 by laser welding. After sealing the opening 52h, a non-aqueous electrolyte solution is filled through the through hole 55 of the battery case 50.

### Non-aqueous Electrolyte Solution

For the non-aqueous electrolyte solution, it is possible to use any conventionally known type of non-aqueous electrolyte solution commonly used for secondary batteries without any particular restriction. The non-aqueous electrolyte solution may be one in which a supporting salt is dissolved in a non-aqueous solvent. Examples of the non-aqueous solvent may include, for example, carbonate-based solvents, such as ethylene carbonate, dimethyl carbonate, and ethyl methyl carbonate. Examples of the supporting salt may include fluorine-containing lithium salts, such as LiPF₆. The non-aqueous electrolyte solution may contain various types of addition agents, such as a gas generating agent, a surface film forming agent, a dispersing agent, and a thickening agent, as necessary.

The non-aqueous electrolyte solution may be filled in a predetermined atmosphere. Although not shown in the drawings, the non-aqueous electrolyte solution may be filled under a depressurized environment. For example, the filling of the non-aqueous electrolyte solution into the battery case 50 may be carried out in a vacuum chamber. A vacuum pump for depressurizing the interior of the chamber may be connected to the chamber.

First, the battery case 50 is placed into the chamber. Next, the interior of the chamber is adjusted to be a predetermined depressurized condition. Next, the non-aqueous electrolyte solution is filled into the battery case 50 with an electrolyte filling nozzle, not shown, being inserted in the through hole 55 (see Fig. 3) of the battery case 50. When the non-aqueous electrolyte solution is filled into the battery case 50, the non-aqueous electrolyte solution starts to permeate into the electrode body 40. Carrying out the filling with the non-aqueous electrolyte solution under a depressurized environment allows the non-aqueous electrolyte solution to easily permeate into the electrode body 40. This may reduce the time required to complete permeation of the non-aqueous electrolyte solution into the electrode body 40. Note that the atmosphere during the filling with the non-aqueous electrolyte solution is not limited to any particular atmosphere. The chamber may be configured so that air, an inert gas such as nitrogen, or the like can be introduced into the chamber.

When the battery assembly 100 is filled with the non-aqueous electrolyte solution, initial charging is subsequently performed.

### Charging Step S20

Charging step S20 (see Fig. 1) involves charging the battery assembly 100. The charging step may preferably be initial charging (gas extraction charging) for generating gas out of the surface of the electrode (negative electrode). The charging step may be carried out under predetermined charging conditions.

The charging conditions may include a condition in which the temperature of the gas inside the battery case 50 increases. In this embodiment, the initial charging is carried out at ordinary temperature of about 25°C (for example, 20°C to 30°C). The initial charging is carried out in a nitrogen gas atmosphere. The charging may cause heat generation of the electrode body 40 and the like inside the battery case 50. This causes the temperature of the gas inside the battery case 50 to increase. **In** this embodiment, the charging conditions are set so that the temperature of the gas inside the battery case 50 reaches higher than or equal to 35°C. It is also possible that the charging conditions may be set so that the temperature of the gas inside the battery case 50 reaches higher than or equal to 40°C. From the viewpoint of battery performance, however, the upper limit of the temperature of the gas inside the battery case 50 may be determined. The upper limit of the temperature of the gas inside the battery case 50 may be 60°C, or may be 55°C. Setting such charging conditions allows a later-described sealing step S30 (see Fig. 1) to perform sealing of the through hole 55 under a condition in which the temperature inside the battery case 50 is high.

The temperature inside the battery case 50 during charging is not limited to the above-mentioned temperatures. The temperature inside the battery case 50 during charging may be determined according to the temperature of the environment in which it is assumed to be used. The temperature inside the battery case 50 during charging may be set, for example, so as to be higher than or equal to 10°C higher than the temperature of the environment in which it is assumed to be used. In this embodiment, the temperature inside the battery case 50 during charging is set to 35°C, which is higher than or equal to 10°C higher than ordinary temperature 25°C, at which the battery 100 is assumed to be used.

The method of obtaining the temperature of the gas inside the battery case 50 is not limited to a particular method. The temperature of the gas inside the battery case 50 may be obtained from the temperature of the battery case 50. For example, the relationship between the temperature of the gas inside the battery case 50 and the temperature of the battery case 50 may be obtained in advance in the following manner. First, a test battery assembly with a desired configuration is prepared. The test battery assembly is charged under charging conditions for initial charging. The temperatures of the gas inside the battery case and the temperatures of the battery case are obtained. Based on the relationship between the temperatures of the gas inside the battery case and the temperatures of the battery case that are obtained by the test, the temperature inside the battery case 50 may be estimated. Alternatively, the temperature of the gas inside the battery case 50 may be directly measured with a temperature sensor (a thermocouple or the like). For example, a very small opening may be formed in the battery case 50, and a thermocouple may be inserted through the opening so as not to contact the electrode body 40. Then, the opening is closed, and the temperature inside the battery case 50 may be obtained by the thermocouple.

The charging of the battery assembly 100 may be carried out with a constant current of higher than or equal to 60 A (so-called CC charging). Charging the battery assembly 100 with a constant current eliminates the need for voltage adjustment, which may reduce the time required for the initial charging. Moreover, it is made easier to calculate the amount of charge that is charged in the initial charging and to adjust the amount of charge required in later charging. From the viewpoint of increasing the temperature of the battery assembly 100 in a short time, it is preferable that the current value during charging be higher. The charging current may preferably be, but is not particularly limited to, higher than or equal to 60 A, more preferably higher than or equal to 80 A, or possibly higher than or equal to 100 A. Although not particularly limited thereto, the charging current may be set to lower than or equal to 300 A.

The charging of the battery assembly 100 may be continued until SOC reaches a predetermined capacity or until the terminal voltage reaches a predetermined voltage value. The SOC and the terminal voltage may be determined as appropriate according to the type of the battery 100 or the like. The charging time may be longer than or equal to 600 seconds. The charging time may preferably be, but is not particularly limited to, longer than 300 seconds, or possibly longer than or equal to 900 seconds. It is preferable that the charging time may not be too long, from the viewpoint of production efficiency. The charging time may be, but is not particularly limited to, less than or equal to 60 minutes, for example, less than or equal to 30 minutes.

The initial charging may be performed at one time or at a plurality of separate times (about 2 to about 5 times, although not particularly limited thereto). When the initial charging is performed at a plurality of separate times, the average charging current during charging may be set to higher than or equal to 60 A. Also, the initial charging may not necessarily be performed with a constant current as described above. The initial charging may be performed by so-called CC-CV charging, in which charging is initially performed with a constant current, and when a predetermined voltage is reached, charging is performed with a constant voltage. The charging conditions may be set as appropriate according to the type, dimensions, and the like of the battery 100.

From the viewpoint of making the release of the gas inside the battery case 50 easier, it is preferable that the through hole 55 be open in the charging step.

### Sealing Step S30

In the sealing step S30 (see Fig. 1), the through hole 55 is sealed with a sealing member 56. The sealing step S30 is carried out while keeping the temperature inside the battery case 50 increased. The sealing step S30 may be carried out under atmospheric pressure (standard pressure). The sealing step S30 may be carried out at ordinary temperature, or may be carried out at a temperature higher than ordinary temperature. The method of sealing the through hole 55 with the sealing member 56 is not limited to any particular method. For the sealing member 56, it is possible to use, for example, a blind rivet or the like.

In the sealing step S30, the through hole 55 is sealed under a condition in which the temperature of the gas inside the battery case 50 is prevented from decreasing from the maximum temperature of the gas inside the battery case 50 in the charging step S20. The through hole 55 is sealed in a condition in which the temperature inside the battery case 50 is higher than ordinary temperature. It is preferable that the through hole 55 be sealed immediately after completion of charging so that the temperature inside the battery case 50 does not decrease. The through hole 55 may be sealed before the temperature inside the battery case 50 does not decrease by greater than or equal to a predetermined temperature from the maximum temperature of the gas inside the battery case 50 in the charging step S20. The through hole 55 may preferably be sealed with the sealing member 56 before the temperature inside the battery case 50 decreases greater than or equal to 2°C, more preferably before the temperature inside the battery case 50 decreases greater than or equal to 1°C, from the maximum temperature of the gas inside the battery case 50 in the charging step S20. The sealing step S30 may preferably be performed immediately after the charging step S20. This is more likely to cause a greater temperature difference inside the battery case 50 between when sealing the through hole 55 and when using the battery 100.

After sealing the through hole 55, aging and the like are performed in a known method, to produce a non-aqueous electrolyte secondary battery 100.

A non-aqueous electrolyte secondary battery may gradually expand due to repeated charging and discharging through long-term use. When the non-aqueous electrolyte secondary battery expands, the space in which the non-aqueous electrolyte secondary battery is placed may be reduced. In addition, when a higher capacity is desired, for example, a plurality of non-aqueous electrolyte secondary batteries may be used while they are arranged in one direction (for example, in a shorter axis direction) and constrained. In such cases, if the plurality of non-aqueous electrolyte secondary batteries expand, the space in which the non-aqueous electrolyte secondary batteries are placed may be further reduced.

In the manufacturing method described above, the through hole 55 in the non-aqueous electrolyte secondary battery 100 is sealed in a condition in which the temperature inside the battery case 50 is higher than ordinary temperature. For this reason, after the sealing step S30, the temperature inside the battery case 50 decreases, causing the gas inside the battery case 50 to contract. This causes a contraction and/or an internal pressure decrease of the battery case 50. In the following, the contraction and the internal pressure decrease of the battery case 50 will be discussed.

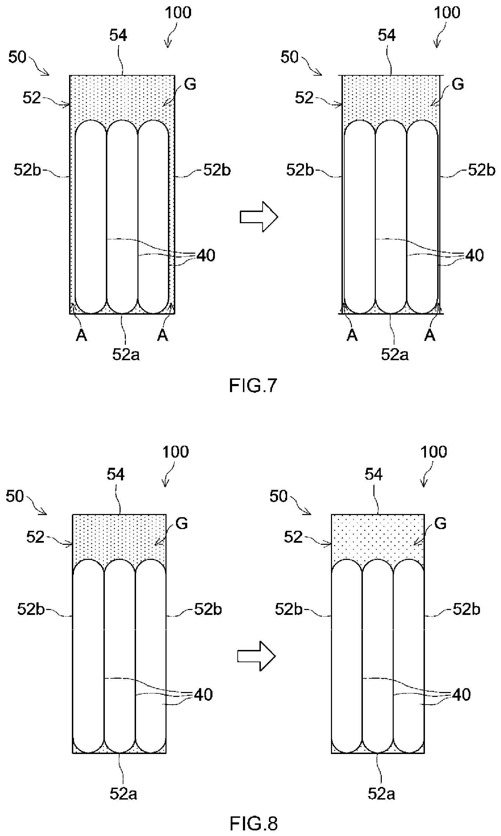

After the through hole 55 is sealed in a condition in which the temperature inside the battery case 50 is higher than ordinary temperature, the battery 100 is placed under a ordinary temperature environment, and the temperature decreases. Figs. 7 and 8 are schematic views illustrating the condition of gas G inside the battery case 50. **In** Figs. 7 and 8, the constituent components except for the battery case 50 and the electrode bodies 40 are not depicted. Figs. 7 and 8 schematically illustrate the internal pressure in the battery case 50 before and after the temperature decrease. Herein, a condition with a lower internal pressure is indicated by a lower stippling density. Fig. 7 is a schematic view illustrating the case in in which there is a gap A between the electrode bodies 40 and the first side walls 52b when sealing the through hole 55. Fig. 8 is a schematic view illustrating the case in in which there is no gap between the electrode bodies 40 and the first side walls 52b when sealing the through hole 55. Figs. 7 and 8 merely illustrate the case in which the battery case 50 causes deformation and the case in which the internal pressure changes, respectively, before and after the temperature decrease, and it should be noted that only one of the events does not necessarily occur.

As the temperature of the battery 100 drops, the gas G inside the battery case 50 tends to contract. As illustrated in Fig. 7, when a gap A exists between the electrode bodies 40 and the first side walls 52b, the battery case 50 may deform so that the gap A narrows (in other words, so that the gap between the pair of first side walls 52b narrows) as the gas G contracts. This is likely to cause the thickness of the battery 100 to decrease. Note that, when the electrode bodies 40 and the first side walls 52b come into contact with each other due to the deformation of the battery case 50, the internal pressure of the battery case 50 decreases as the temperature further decreases.

As illustrated in Fig. 8, when no gap exists between the electrode bodies 40 and the first side walls 52b (or when the gap between the electrode bodies 40 and the first side walls 52b has been lost due to contraction of the battery case 50), the battery case 50 is unlikely to deform even if the gas G contracts. As a result, the volume of the gas G is unlikely to change. Instead, the internal pressure of the gas G may decrease. The expansion of the battery case 50 resulting from an internal pressure increase is more unlikely to occur due to the pressure difference between the inside and the outside of the battery case 50.

The higher the temperature inside the battery case 50 in sealing the through hole 55, the greater the temperature difference between before and after the sealing. When the battery case 50 houses a plurality of electrode bodies 40, the temperature inside the battery case 50 is kept high, and the above-described effect may be obtained. **In** addition, the greater the size of the electrode bodies 40 with respect to the space volume inside the battery case 50, the greater the above-described effect may be.

Moreover, the effect of preventing expansion of the battery case 50 is more effective when the amount of the gas inside the battery case 50 is smaller. When the space volume inside the battery case 50 after filling with the non-aqueous electrolyte solution is smaller with respect to the volumetric capacity of the battery case 50 in an empty state, the above-described deformation and internal pressure decrease of the battery case 50 may be greater. For example, it is preferable that the space volume inside the battery case 50 after filling with the non-aqueous electrolyte solution be less than or equal to 50 cm³. The space volume inside the battery case 50 means the volume of the battery case 50 in the empty state, excluding the components provided inside the battery case 50, such as the electrode bodies 40, the non-aqueous electrolyte solution, and so forth. It is preferable that the space volume inside the battery case 50 be less than or equal to 10% of the volume of the battery case 50 in the empty state. **In** this embodiment, the dimension of the battery case 50 along the shorter side axis X is about 30 mm, the dimension along the longer side axis Y is about 308 mm, and the dimension along the height axis Z is 90 mm. The space volume inside the battery case 50 is 42.1 cm³. The space volume inside the battery case 50 with respect to the volume of the battery case 50 in the empty state is 5.1%. When the gap A is provided between the electrode bodies 40 and the first side walls 52b, the size of the gap A may preferably be less than or equal to 15 mm per one side (for example, a total of less than or equal to 30 mm for both sides).

The method of manufacturing a non-aqueous electrolyte secondary battery described above uses the temperature difference between before and after charging and sealing to cause a contraction and/or an internal pressure decrease of the battery case. Such a manufacturing method makes it possible to cause a contraction and/or an internal pressure decrease of the battery case in a contactless manner. Moreover, an additional facility to cause a deformation or an internal pressure decrease of the battery case is unnecessary. For example, it is unnecessary to provide processing for directly restraining the battery case or the like. Therefore, the equipment configuration may be simplified, and the cost of the non-aqueous electrolyte secondary battery may be reduced.

In the above-described embodiment, the sealing step S30 is performed after the charging step S20. It is also possible to provide additional steps other than the charging step S20 and the sealing step S30.

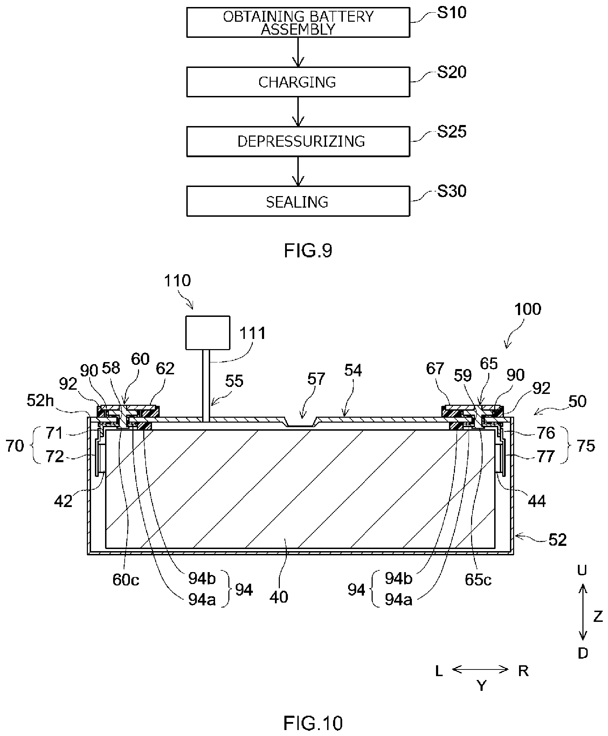

Fig. 9 is a flowchart illustrating a method of manufacturing a non-aqueous electrolyte secondary battery according to another embodiment of the disclosure. Fig. 10 is a cross-sectional view illustrating the battery assembly 100 in a depressurizing step S25. As illustrated in Fig. 9, the method of manufacturing a non-aqueous electrolyte secondary battery may also include a depressurizing step S25. The step S10 of obtaining a battery assembly, the charging step S20, and the sealing step S30 are the same as those in the above-described embodiment and are not further described herein.

In this embodiment, the depressurizing step S25 is performed between the charging step S20 and the sealing step S30. In the depressurizing step S25, a nozzle 111 of a depressurizing device 110 is inserted through the through hole 55, as illustrated in Fig. 10. For the depressurizing device 110, it is possible to use, for example, a vacuum pump. The gas inside the battery case 50 is sucked from the nozzle 111. As a result, the amount of the gas inside the battery case 50 decreases. This allows the internal pressure of the battery case 50 to decrease more easily after the sealing step S30 and to prevent expansion of the battery case 50 more easily. In this embodiment, the outer diameter of the nozzle 111 is approximately the same as the inner diameter of the through hole 55. The inside of the battery case 50 is depressurized under the condition in which the outer circumferential surface of the tip end of the nozzle 111 is in close contact with the inner circumferential surface of the through hole 55. Depressurizing the inside of the battery case 50 while making the nozzle 111 and the through hole 55 in close contact with each other makes gas difficult to flow into the battery case 50. As a result, the depressurization efficiency may be improved. Moreover, when the tip end of the nozzle 111 is not deeply inserted inside the battery case 50, the components such as the electrode bodies 40 that are housed in the battery case 50 are unlikely to be damaged. It should be noted that the method of depressurizing the inside of the battery case 50 is not limited to such an embodiment.

In this embodiment, the inside of the battery case 50 is depressurized using the nozzle 111 inserted through the through hole 55. Such an embodiment does not require the battery assembly 100 to be moved to a dedicated facility for depressurization. The depressurizing step S25 may be carried out immediately after the charging step S20. This allows the depressurizing step S25 to be carried out while the temperature inside the battery case 50 is kept high. The temperature inside the battery case 50 is likely to be kept high even when sealing the through hole 55 (i.e., when in the sealing step S30). As a result, it is more likely to cause contraction and/or an internal pressure decrease of the battery case 50.

The charging step S20 and the depressurizing step S25 may be carried out simultaneously. **In** other words, the depressurizing step S25 may be incorporated in the charging step S20. The timing to start the depressurization of the inside of the battery case 50 is not particularly limited. Carrying out the charging step S20 and the depressurizing step S25 simultaneously allows the depressurization time to be longer. This further decreases the amount of the gas inside the battery case 50. As a result, it is even more likely to cause contraction and/or an internal pressure decrease of the battery case 50.

The depressurizing step S25 may be started before the start of charging of the battery assembly 100, may be started after the start of charging of the battery assembly 100, or may be started simultaneously with the start of charging of the battery assembly 100.

It is preferable that the depressurizing of the inside of the battery case 50 may be ended at the same time as the end of charging of the battery assembly 100. From the viewpoint of keeping the temperature inside the battery case 50 high, it is preferable that the depressurizing of the inside of the battery case 50 may be ended before the end of charging of the battery assembly 100. However, from the viewpoint of reducing the gas inside the battery case 50, it is preferable that the time between the end of depressurizing of the inside of the battery case 50 and the end of charging of the battery assembly 100 may not be too long. For example, the time difference between the end of depressurizing of the inside of the battery case 50 and the end of charging of the battery assembly 100 may preferably be within 60 seconds, more preferably within 30 seconds. It is even more preferable that the end of depressurizing of the inside of the battery case 50 and the end of charging of the battery assembly 100 be may be ended at the same time.

Although the depressurization conditions are not particularly limited, the output power of the depressurizing device 110 may be set so that the pressure inside the battery case 50 becomes about 0.0001 atmosphere to about 0.1 atmosphere. In addition, from the viewpoint of sufficiently depressurizing the battery case 50, the time for starting up the depressurizing device 110 may be set to longer than or equal to about 30 seconds.

Various embodiments of the technology according to the present disclosure have been described hereinabove. Unless specifically stated otherwise, the embodiments described herein do not limit the scope of the present disclosure. It should be noted that various other modifications and alterations may be possible in the embodiments of the technology disclosed herein. In addition, the features, structures, or steps described herein may be omitted as appropriate, or may be combined in any suitable combinations, unless specifically stated otherwise.

Although the charging step S20 is carried out to also serve as initial charging in the foregoing embodiments, such embodiments are merely illustrative. The charging step S20 may be incorporated in additional charging after the initial charging for generating gas out of the surface of the electrode. Although the through hole 55 is an electrolyte filling port for filling with the non-aqueous electrolyte solution in the foregoing embodiments, such embodiments are merely illustrative. The through hole 55 may be another hole that is provided separately from the electrolyte filling port in the battery case. **In** this case, the depressurization of the inside of the battery case 50 may be carried out with the electrolyte filling port being plugged,

**In** addition, the present description includes the disclosure as set forth in the following items.

### Item 1:

A method of manufacturing a non-aqueous electrolyte secondary battery, the method including the steps of:
obtaining a battery assembly including a battery case, an electrode body including a positive electrode and a negative electrode, and a non-aqueous electrolyte solution, the battery case housing the electrode body and the non-aqueous electrolyte solution and including a through hole;
charging the battery assembly; and
sealing the through hole with a sealing member after the step of charging, wherein:
   in the step of charging, the charging is performed under a charging condition that causes a temperature of a gas inside the battery case increases;
   the step of sealing is performed while keeping a temperature inside the battery case increased; and
   after the step of sealing, the temperature inside the battery case decreases, and the gas inside the battery case contracts, to thereby cause a contraction and/or an internal pressure decrease of the battery case.

### Item 2:

The method of manufacturing a non-aqueous electrolyte secondary battery according to item 1, further including depressurizing an inside of the battery case between the step of charging and the step of sealing.

### Item 3:

The method of manufacturing a non-aqueous electrolyte secondary battery according to item 1 or 2, wherein, in the step of charging, the inside of the battery case is depressurized.

### Item 4:

The method of manufacturing a non-aqueous electrolyte secondary battery according to any one of items 1 through 3, wherein, in the step of charging, the battery assembly is charged so that the temperature of the gas inside the battery case reaches higher than or equal to 35°C.

### Item 5:

The method of manufacturing a non-aqueous electrolyte secondary battery according to any one of items 1 through 4, wherein, in the step of sealing, the through hole of the battery case is sealed with the sealing member before the temperature of the gas inside the battery case decreases greater than or equal to 2°C from a maximum temperature of the gas inside the battery case in the step of charging.

### Item 6:

The method manufacturing a non-aqueous electrolyte secondary battery according to any one of items 1 through 5, wherein the battery case houses a plurality of electrode bodies.

## Claims

1. A method of manufacturing a non-aqueous electrolyte secondary battery (100), the method comprising the steps of:
obtaining (S10) a battery assembly (100) including a battery case (50), an electrode body (40) including a positive electrode (20) and a negative electrode (30), and a non-aqueous electrolyte solution, the battery case (50) housing the electrode body (40) and the non-aqueous electrolyte solution and including a through hole (55);
charging (S20) the battery assembly (100); and
sealing (S30) the through hole (55) with a sealing member (56) after the step of charging (S20), wherein:
in the step of charging (S20), the charging is performed under a charging condition that causes a temperature of a gas (G) inside the battery case (50) increases;
the step of sealing (S30) is performed while keeping a temperature inside the battery case (50) increased; and
after the step of sealing (S30), the temperature inside the battery case (50) decreases, and the gas (G) inside the battery case (50) contracts, to thereby cause a contraction and/or an internal pressure decrease of the battery case (50).

2. The method of manufacturing a non-aqueous electrolyte secondary battery (100) according to claim 1, further comprising depressurizing (S25) an inside of the battery case (50) between the step of charging (S20) and the step of sealing (S30).

3. The method of manufacturing a non-aqueous electrolyte secondary battery (100) according to claim 1 or 2, wherein, in the step of charging (S20), the inside of the battery case (50) is depressurized.

4. The method of manufacturing a non-aqueous electrolyte secondary battery (100) according to claim 1 or 2, wherein, in the step of charging (S20), the battery assembly (100) is charged so that the temperature of the gas (G) inside the battery case (50) reaches higher than or equal to 35°C.

5. The method of manufacturing a non-aqueous electrolyte secondary battery (100) according to claim 1 or 2, wherein, in the step of sealing (S30), the through hole (55) of the battery case (50) is sealed with the sealing member (56) before the temperature of the gas (G) inside the battery case (50) decreases greater than or equal to 2°C from a maximum temperature of the gas (G) inside the battery case (50) in the step of charging (S20).

6. The method manufacturing a non-aqueous electrolyte secondary battery (100) according to claim 1 or 2, wherein the battery case (50) houses a plurality of electrode bodies (40).
